# EUROPEAN PATENT SPECIFICATION

(11) **EP 3 139 856 B1**
(45) Date of publication and mention of the grant of the patent: **11.12.2019**
(21) Application number: 15720221.9
(22) Date of filing: 06.05.2015
(51) Int. Cl.: A61C 9/00, G01B 11/25

(54) **METHOD OF CREATING A 3D MODEL DENTAL OCCLUSION**
VERFAHREN ZUR ERSTELLUNG EINER 3D DENTALEN OKKLUSION
METHODE POUR CREER UN MODELE 3D D'OCCLUSION DENTAIRE

(30) Priority: 07.05.2014 GB 201408031
(43) Date of publication of application: 15.03.2017
(73) Proprietor: University of Leeds, Leeds LS2 9LJ (GB)
(72) Inventor: KEELING, Andrew, Leeds West Yorkshire LS2 9LJ (GB)
(74) Representative: Harrison IP Limited
(86) International application number: PCT/GB2015/051316
(87) International publication number: WO 2015/170083

(56) References cited:
- EP-A1- 1 449 489
- WO-A1-2013/132537
- DE-A1-102012 214 470
- US-A1- 2004 172 150
- US-A1- 2006 072 810
- US-A1- 2008 124 681

## Description

### Field of the Invention

This invention relates to a dental model scanner for use in imaging dental models and for storing an electronic image of the models.

### Background to the Invention

Dental regulations require that dental models are stored for several years. Due to the size of the dental models, dentists require large storage space for models that may well never be needed. In such situations, it is advantageous to store the models electronically using a scanning device to record the information in the form of a 3-dimensional image.

Dental models comprise an upper model and a lower model and each of these must be scanned individually. Additionally an occlusion, or bite, view with the upper and lower models aligned to replicate a patient's occlusion is also required. This involves clamping the model into a fixture within the scanner. However, over-tightening of the fixture can result in the teeth of the model being forced together and cracking or breaking.

A problem with existing scanners is that they take a long time to scan a single model. For example, it might take up to 10 minutes per scan and where three views are required, it could take up to half an hour to scan a single patient's models. This results in prohibitively expensive scanning costs due to the cost of the scanner and the operator's time and costs.

Existing scanners make use of a projector to project a grid or line pattern comprising a plurality of squares or lines projected onto the model. The geometric distortion of those squares or lines is recorded using a camera. With such systems, defocus can be a problem when the edge of a blurred line is difficult to distinguish. The model is then rotated and a second image recorded and this is repeated until the whole model has been captured electronically. The camera records a large area of the model in each scan view. Therefore, multiple images are required to ensure that the model has been fully scanned.

A method of creating a 3-dimentional model of a person's dental occlusion involving combining the 3-dimensional images of the upper and lower dental models and aligning the markers to create a combined image of the person's occlusion is described in WO2013/132537.

### Summary of the Invention

Accordingly, the present invention is directed to a method of creating a 3-dimensional model of a person's dental occlusion comprising the steps of;
aligning an upper dental model and a lower dental model to replicate a user's occlusion, whilst they are in occlusion, positioning a marker comprising three marks on the models such that at least one mark is positioned on each of the models, said marks are non collinear and have a known distance relationship between them, the marker is then positioned in two further locations, each time with at least one mark on each of the models;
once the models have been marked, scanning the two models individually, and
creating a 3-dimensional image of one of the upper and lower dental models;
creating a 3-dimensional image of the other dental model;
combining the 3-dimensional images of the upper and lower dental models and, knowing the original geometric alignment of the marks of the markers, the models can be repositioned to align the virtual marks accordingly to create a combined image of the person's occlusion.

Positioning markers, which may comprise dots, crosses or other distinguishing identifiers, on both the upper and lower dental models, allows for the two models to be scanned individually and then the virtual models can be combined post-scan to allow for a combined image to be created from the two individual scanned images. The markers may be coloured and/or of a particular shape that will stand out from the scan of the models and be easily identifiable.

It is preferable that the markers are provided along the outer surface of each model. The markers may be positioned along the 'gum line' of the model or on/adjacent to a tooth. Whilst the markers could be positioned inside the models (in the rear side of the teeth), it is easier to align markers on the outer surface of the models.

According to the invention, the markers comprise a series of non-collinear marks having a known distance relationship between them. The use of non-collinear marks makes identifying their position easier and more accurate due to their geometric relationship. Knowing the distance and angles between the marks allows for the positioning of the scanned images of the upper and lower models to be determined mathematically in three dimensions.

In a preferred embodiment, the markers comprise three dots defining a plane such that at least one of the three-points is on each of the upper and lower models. Preferably, the three marks are dots arranged in an equilateral triangle formation. Markers comprising three dots are simple to identify and, knowing the distance between the three dots, assists in aligning the virtual models to recreate the bite of a patient. Having at least one dot on each model means that there is at least one identifier on each model for aligning the virtual images. Whilst further dots could be used, for example, four or five, using three dots reduces the amount of analysis required in assembling the image of the patient's bite.

In an advantageous arrangement, the markers are located at three points on the outer surface of the aligned models. Positioning the markers in three locations on the outer surface of the models provides sufficient information to accurately align the models once they have been scanned. More markers may be used, however, three markers reduces the required processing time, whilst also allowing for an accurate alignment of the two models in virtual space.

The method(s) as described herein and the scanner as described herein may be used alone or in combination to scan dental model.

The present disclosure also describes a dental model scanner comprising:
a plurality of cameras set apart from one another;
a model holder; and
a light source, wherein the light source projects a sine wave pattern directed onto the surface of the dental model and the relative phase of at least one pixel can be recorded by the plurality of cameras.

Using a sine wave intensity modulation pattern, the plurality of cameras, which may be two or more laterally spaced apart cameras, provide a stereoscopic view of the model, which assists in quickly producing a 3-dimensional image of the model. This 3-dimensional image may be considered to be a virtual image of the model. The system assesses where on the model a pixel of the sine wave pattern is located on the image obtained from the first camera. The closest matching pixel is then identified on the image obtained from the second camera and the 3-dimensional position of that pixel is then triangulated to create the 3-dimensional virtual image.

Whilst existing systems use grids or lines and determine the geographical distortion of the grid or line to determine the shape over which it is positioned, the use of a sine wave intensity pattern in the present invention provides an accurate determination of depth and so builds an accurate 3-dimensional image of the model.

The light source can project a series of sine wave patterns with the phase of the sine wave being offset in subsequent projections in the series. The use of a "marching sine wave", which is created by shifting the phase of the sine wave image, allows for the intensity of the light to be varied across the model. Taking repeated images of the model whilst is it exposed to a phase shifted sine wave allows for an accurate 3-dimensional image to be created by assessing pixels as the pattern is moved across the model and corresponding pixels are located. The pattern may be a high frequency sine wave pattern, which increases the contrast between adjacent pixels.

Advantageously, the light source is further capable of projecting coloured light. The light source may be able to produce a series of blank coloured light frames, for example producing red, green and blue light, in order to allow for a colour image of the model to be created. A single frame of each solid colour may be taken so that a colour image can be created from the frames for each 3D view.

It is preferable that the model holder is rotatable relative to the plurality of cameras and the light source. The model may be rotatable in any number of degrees of freedom, however, three angular degrees of freedom allow the model to be adjusted in order to take multiple images of the model from various different angles, thereby allowing the model to be accurately modelled from all directions.

In an advantageous construction, the scanner further comprises a second arrangement comprising a plurality of cameras, a model holder and a light source that projects a sine wave pattern and wherein the model holder of the second arrangement is linked to the model holder of the first arrangement so that movement, including rotation, of one model holder results in substantially the same rotation of the other model holder(s). It may be preferable to have two scanning units adjacent one another with linked model holders in the form of linked turntables. The holders may be linked mechanically or via software so that they are both orientated in the same position. This allows for both a model of the upper teeth and a model of the lower teeth to both be scanned at the same angle at the same time, thereby reducing the time required to acquire the scans of the two models.

The present disclosure extends to a method of scanning dental models comprising the steps of:
projecting a sine wave pattern onto a dental model;
recording the relative phase of at least one pixel of the sine wave pattern using a plurality of cameras; and
analysing the recorded information to create a 3d image from the dental model.

Taking a scanning image of the model using a pattern having its intensity sine wave varied allows the cameras to capture an image of the model, as described above. By matching pixels based on their intensity as a result of the sine wave being projected onto the model a virtual image is built up by triangulating the pixels in 3-dimensional space.

The method may further comprise the step of taking a second view of the model, and wherein the phase of the sine wave patent is adjusted relative to the first view of the model, and the pattern projected onto the dental model and the relative phase of at least one pixel is recorded, and, more preferably, between five and ten frames of the model are taken. By taking between five and ten frames of the model, and ideally taking seven, an accurate representation of the model can be obtained. Whilst more or fewer images could be taken, between five and ten frames gives sufficient information to create the digital representation of the model in a relatively low time-scale.

It is advantageous that the phase of the sine wave is adjusted between each frame, and it is particularly advantageous that the phase of the sine wave between each subsequent frame is adjusted by 2π/number of frames. Taking frames that have a phase difference in the sine wave, adjusted by 2π divided by the number of frames to be taken, gives a complete period of the sine wave and so allows for a plurality of pixel intensity assessments to be made, thereby leading to a reliable and accurate representation of the model, which assists in locating the pixel in virtual 3-dimensional space. Additionally, the marching sine wave allows for a robust sub-pixel resolution and for a greater depth of field for the projected patterns since sharp focus is not essential. The greater depth of field scanning allows for a wide field of view and therefore a large proportion of the model can be acquired with each scan, thus reducing the overall number of scans required to create the virtual model.

The method may also include a step wherein a reference scan is undertaken. The reference scan may also be of an intensity-varied sine wave and it may have a different period from that of the scanning sine wave. The reference sine wave provides reference information on the pixel intensity at different positions along the model in order to assist with identifying pixels from the scanned images.

The reference scan may comprises a series of scans wherein a sine wave pattern is projected onto the dental model with the reference sine wave having a larger wavelength than the sine wave used in recording the relative phase of the at least one pixel. Adjusting the phase of the reference sine wave and taking plurality of images allows the reference scan to be used to identify the position of the pixels of the imaging scan.

to the present disclosure also provides a method of processing a dental model scan comprising a first step of acquiring data from a scan of a dental model using a first processing arrangement, and a second step of analysing the acquired data using a second processing arrangement. By using a separate processing arrangements for the capturing of information from the processing arrangement used to analyse the captured information and create the scanned image of the model, the time required for completing the scan is reduced.

Processing the image in parallel with capturing information, rather than in series, allows for information from a second scan to be captured whilst information already captured in a first scan is analysed. The arrangements may be central processing units in a computer system.

In one arrangement the first central processing unit and the second central processing unit are contained within respective first and second devices.

In an alternative arrangement the central processing units are contained within the same device.

### Detailed description of an example

In one example, the scanner comprises a light projector mounted centrally between two cameras and in front of a model holder, which is in the form of a rotatable table. The cameras are laterally spaced apart at an angle between a first camera, the turntable and the second camera of approximately 25°. The turntable is provided with clamping means to hold the dental model in place.

The cameras and projector are connected to a processing unit in the form of a laptop computer having a dual core, or multi core, processing arrangement.

Upper and lower dental models are aligned and positioned to replicate a patient's occlusion. Whilst they are held in the 'bite' position, a marker comprising three red dots is positioned on the model such that at least one dot is positioned on each of the models. The three dots are arranged in an equilateral triangle formation and are all contained within a single plane. The marker is then positioned in two further asymmetrical locations, each time with at least one dot on each of the models.

Once the models have been marked, a first dental model is positioned onto the turntable and secured thereto. The projector projects scanning pattern in the form of a modulated sine wave pattern, wherein the intensity of the pattern is a sinusoidal function of its location. The period of the pattern is 100 pixels and it is repeated over the required area. The cameras record an image of the pattern projected onto the model. The whole of the model is scanned in each frame to produce a low resolution but time-efficient scan.

The phase of the sine wave pattern is then adjusted by 2π/7 and the pattern is again projected onto the model. The cameras record a second image of the pattern as it is projected onto the model. The cameras record five further images, resulting in seven frames wherein the phase of the sine wave pattern is adjusted in each.

Once the scanning pattern has been captured, a series of colour frames are recorded by projecting red light onto the model and capturing the image, then green light and finally blue light. The coloured images can later be used to add colour to the final virtual model and are used for identifying the markers and for shading purposes.

A reference scan is then taken in a similar manner with the reference pattern comprising a sine wave varied intensity pattern having a larger period than the scanning pattern. The cameras capture the reference pattern whilst it is projected onto the model. The phase of the reference scan is adjusted by 2π/4 and the pattern is captured again. The process is repeated twice more to give four reference frames.

The model is rotated by a predetermined amount and further images are taken of the model from a second angle. The model may then be rotated several more times to obtain a full 360° view, for example, twelve views may be taken, each 30° offset from the previous view or by a different degree of tilt in order to capture the anatomy of the model. The scan pattern can be further optimised to capture the areas of interest in a typically U-shaped arch. One side of the model may be scanned in more depth than the other side of the model.

The sequence of received images is pre-processed to produce a phase map image for the left and right camera and a colour image. This has minimal overhead and the scanner is ready to scan the next model. Once the information has been collected using a first processor, it is passed to a second processor to be analysed.

The pixels of the first scanning image taken by one camera are identified and matched with pixels of the same intensity of the image taken by the other camera. The relative phase of the pixels is determined with reference to the reference scan to ensure that the pixels are correctly matched between the two images. This gives a stereoscopic view of the pixels. The positions of the pixels are then triangulated to determine their position in 3-dimensional space.

Once the images have been processed the locations of the identified pixels in 3-dimensional space are combined to create a virtual model. The phase images and colour images are processed to create a full 3-dimensional model. The colour images are used to identify the location of the markers and for shading.

The second model is then scanned in the same way to create a second virtual model.

Once both of the virtual models have been created, the markers that were added to them are located and the virtual models are aligned on top of one another to create a "virtual bite" arrangement to replicate the occlusion of the patient. Knowing the original geometric alignment of the dots of the markers, the models can be repositioned to align the virtual dots accordingly. The alignment process first finds the location of the dots, which is extracted from the images using colour or feature extraction methods and the extracted voxels are clustered. The correct alignment of the models is established by first rejecting those pairings that would result in the models facing in the same direction, based on the turntable scanning axis direction. With the remaining candidate pairs of markers, the minimal error between expected and scanned dot patterns is found and the smallest is chosen to be correct. Thus, the models are aligned to produce an image of the occlusion.

By aligning the virtual models based upon the markers, there is no need to perform a third scan of the two models held in the occlusion position. This reduces the scan time, thereby saving on the cost of producing the final virtual models.

The process can use sub-pixel analysis in order to obtain improved resolution of the virtual image. Having the sine wave scanning pattern may be beneficial in order to improve the image using sub-pixel analysis.

The resolution of the image may be of the order of 100 microns in order to provide sufficient resolution for the images to be of use, whilst keeping the image sufficiently small to be easily stored. However, the resolution may be adjusted, if required, to obtain a level 10 microns.

The angle between the cameras may be adjusted according to the requirements and the triangulation calculations adjusted accordingly.

The method(s) as described herein and the scanner as described herein may be used alone or in combination to scan dental model.

The turntable for adjusting the views may be motorized or may be linked to a motor in order to obtain quick and accurate rotation. Furthermore, a gearbox may be provided. Additionally, the turntable may tilt and where two turntables are present they may rotate and/or tilt in unison so that the models are aligned during the scanning process.

Taking more images of the model, each scan having a reduced phase shift, can reduce the 'noise' but increases the scan time. Therefore, although possible, more than ten scans is less desirable than between five and ten scans.

Whilst two marks, each comprising at least three dots, could be used, it is preferable that three or more are used for aligning the models.

The speed of workflow in the present invention is borne out by a cumulative effect of fewer scans being required and separate processing. This results in the scanner being ready for the next model despite not having yet constructed the 3D image of previous one. Furthermore, a quick pointcloud reconstruction can be created to check the quality of the scan, rather than having to wait for the full model to be built.

## Claims

1. A method of creating a 3-dimensional model of a person's dental occlusion comprising the steps of;
aligning an upper dental model and a lower dental model to replicate a user's occlusion whilst they are in occlusion, positioning a marker comprising three marks on the models such that at least one mark is positioned on each of the models, said marks are non-collinear and have a known distance relationship between them, the marker is then positioned in two further locations, each time with at least one mark on each of the models;
once the models have been marked, scanning the two models individually, and
creating a 3-dimensional image of one of the upper and lower dental models;
creating a 3-dimensional image of the other dental model;
combining the 3-dimensional images of the upper and lower dental models and, knowing the original geometric alignment of the marks of the markers, the models can be repositioned to align the virtual marks accordingly to create a combined image of the person's occlusion.

2. A method according to claim 1, wherein the markers are provided along the outer surface of each model.

3. A method according to claim 1, wherein the three marks are dots arranged in an equilateral triangle formation.

## Patentansprüche

1. Verfahren zum Erstellen eines dreidimensionalen Modells der dentalen Okklusion einer Person, umfassend die folgenden Schritte;
Ausrichten eines oberen dentalen Modells und eines unteren dentalen Modells, um die Okklusion eines Benutzers zu replizieren, während sie in Okklusion sind, Positionieren eines Markers, der drei Markierungen umfasst, auf den Modellen, sodass mindestens eine Markierung auf jedem der Modelle positioniert ist, wobei die Markierungen nicht kollinear sind und ein bekanntes Abstandsverhältnis zwischen ihnen aufweisen, der Marker dann an zwei weiteren Positionen positioniert wird, jeweils mit mindestens einer Markierung auf jedem der Modelle;
nachdem die Modelle markiert wurden, individuelles Scannen der zwei Modelle und
Erzeugen eines dreidimensionalen Bildes von einem von dem oberen und unteren dentalen Modell;
Erzeugen eines dreidimensionalen Bildes des anderen dentalen Modells;
Kombinieren der dreidimensionalen Bilder des oberen und unteren dentalen Modells und in Kenntnis der ursprünglichen geometrischen Ausrichtung der Markierungen der Marker können die Modelle neu positioniert werden, um die virtuellen Markierungen entsprechend auszurichten, um ein kombiniertes Bild der Okklusion der Person zu erzeugen.

2. Verfahren nach Anspruch 1, wobei die Marker entlang der Außenfläche von jedem Modell bereitgestellt sind.

3. Verfahren nach Anspruch 1, wobei die drei Marker Punkte sind, die in einer Formation eines gleichseitigen Dreiecks angeordnet sind.

## Revendications

1. Procédé de création d'un modèle tridimensionnel de l'occlusion dentaire d'une personne comprenant les étapes de ;
alignement d'un modèle dentaire supérieur et d'un modèle dentaire inférieur pour reproduire l'occlusion d'un utilisateur lorsqu'ils sont en occlusion, positionnement d'un marqueur comprenant trois marques sur les modèles de sorte qu'au moins une marque soit positionnée sur chacun des modèles, lesdites marques étant non colinéaires et possédant une relation de distance connue entre eux, le marqueur est ensuite positionné en deux autres emplacements, chaque fois avec au moins une marque sur chacun des modèles ;
une fois que les modèles ont été marqués, balayage des deux modèles individuellement et
création d'une image tridimensionnelle de l'un des modèles dentaires supérieur et inférieur ;
création d'une image tridimensionnelle de l'autre modèle dentaire ;
combinaison des images tridimensionnelles des modèles dentaires supérieur et inférieur et, connaissant l'alignement géométrique d'origine des marques des marqueurs, les modèles peuvent être repositionnés pour aligner les marques virtuelles en conséquence afin de créer une image combinée de l'occlusion de la personne.

2. Procédé selon la revendication 1, lesdits marqueurs étant disposés le long de la surface externe de chaque modèle.

3. Procédé selon la revendication 1, lesdites trois marques étant des points agencés selon une formation de triangle équilatéral.
